# EUROPEAN PATENT SPECIFICATION

(11) **EP 1 591 323 B1**
(45) Date of publication and mention of the grant of the patent: **02.05.2012**
(21) Application number: 05005973.2
(22) Date of filing: 18.03.2005
(51) Int. Cl.: B60R 21/16, B60R 21/20

(54) **Vehicle having an airbag system**
Fahrzeug mit einer Airbagvorrichtung
Véhicule avec un système de sac gonflable

(30) Priority: 28.04.2004 JP 2004134392
(43) Date of publication of application: 02.11.2005
(73) Proprietor: TAKATA CORPORATION, Minato-ku, Tokyo 106-8510 (JP)
(72) Inventor: Noguchi, Atsushi, c/o Takata Corporation, Tokyo 106-8510 (JP); Hiraoka, Kenji, c/o Takata Corporation, Tokyo 106-8510 (JP)
(74) Representative: Vossius & Partner

(56) References cited:
- EP-A- 1 314 618
- US-A- 6 110 094
- US-A1- 2002 096 864
- US-A1- 2002 158 450
- PATENT ABSTRACTS OF JAPAN vol. 2003, no. 12, 5 December 2003 (2003-12-05) & JP 2004 058848 A (TOYODA GOSEI CO LTD), 26 February 2004 (2004-02-26)
- PATENT ABSTRACTS OF JAPAN vol. 2003, no. 10, 8 October 2003 (2003-10-08) & JP 2003 175792 A (NIPPON PLAST CO LTD), 24 June 2003 (2003-06-24)

## Description

The present invention relates to a vehicle having an airbag system. It relates to an airbag system mounted to vehicles such as cars, and in particular, it relates to a technique of constructing an airbag system for protecting occupants from coming into collision with the side wall of a vehicle in a car accident such as a side crash or rolling sideways.

Various techniques of constructing airbag systems are proposed to protect occupants from coming into collision with the side wall of a vehicle such as a side window or a door in a car accident such as a side crash or rolling sideways. Well-known airbag systems include an airbag system having a vehicle airbag accommodated along the side-roof rail of a car in a folded state in a roll (e.g., JP-A-2003-200809 (Patent Document 1)). The reference presents a technique of inflating a vehicle airbag smoothly by folding the airbag in a roll. However, in order to achieve a high-level technique of inflating a vehicle airbag quickly and reliably into an occupant protection region between the side wall of the vehicle and an occupant, further technical search is required.

Us 2002/158450 A1 discloses the features of the preamble of the independent claim 1 relates to a folding configuration for an inflatable airbag curtain to protect the passenger's head from impact against a side of the vehicle, comprising a rolled portion and a fold portion positioned on opposing sides of a lon-gitudinal crease section. The crease acts as a fulcrum causing the rolled portion to be directed into the interior of the vehicle as the airbag curtain inflates.

The present invention is made in view of the above problem. Accordingly, it is an object of the invention to provide a technique of constructing an airbag system for thorough protection of occupants in a car accident.

The present invention has been made to achieve the above object. The invention is a technique applicable to the structure of airbag systems mounted to various vehicles. such as cars, trains, and vessels.

The above object is achieved with a vehicle having an airbag system according to Claim 1.

The vehicle airbag is mounted to the upper part of the side wall of a vehicle and has the function of protecting an occupant by inflating downward into an occupant protection region between the occupant and the side wall of the vehicle in a car accident such as a side crash or rolling sideways. To the vehicle airbag, inflation gas is supplied by a gas supply means such as an inflator having a gas generating function. Here the "vehicle side wall" broadly includes components of the vehicle which are located on the side (the right side and left side) of the occupant, typically, a side window and a door. Typically, the vehicle airbag of the invention is mounted to the boundary between a side roof panel at the upper part of the vehicle side wall and a ceiling panel.

The vehicle airbag of the invention has a structure in which a folded portion and an extending portion are combined.
The folded portion of the vehicle airbag is folded in a predetermined shape in advance and is formed by assembling a rolled-up (folded) portion and a concertinas portion as appropriate. The folded portion is a combination of a rolled portion and a concertinas portion. The extending portion of the vehicle airbag extends above the rolled portion and downward along the folded portion so as to cover the side of the folded portion from the interior side of the vehicle when the vehicle airbag is mounted to the vehicle. The "extending portion" here has only to have at least a portion extending downward along the folded portion from its base end to the distal end. For example, a portion extending downward from its base end to the distal end along the folded portion and then folded upward along the folded portion also belongs the category of the "extending portion" of this invention.

With the vehicle airbag of this structure, of the portions of the vehicle airbag, the extending portion extending downward so as to cover the folded portion restrains the folded portion from deploying laterally at the upper part of the occupant protection region, while it allows the folded portion to deploy downward. In other words, the vertically extending vehicle side wall and extending portion form a kind of wall that partitions both sides of the folded portion and restrain the lateral inflating action of the folded portion. Thus the folded portion preferentially inflates (deploys) downward along the vehicle side wall toward the occupant protection region. The "restrain" here principally denotes restraint of lateral inflating action so as to preferentially inflate the folded portion downward toward the occupant protection region and is not limited to complete restraint of the lateral inflating action of the folded portion.
Thus, this structure according to Claim 1 allows the vehicle airbag to inflate quickly along the vehicle side wall into the occupant protection region, thereby ensuring protection of occupants in a car accident.

In the vehicle having an airbag system according to the present invention, the extending portion of the airbag includes a first extending portion extending above the folded portion and a second extending portion extending along the side of the folded portion.
With the vehicle airbag of this structure, the upward inflating action of the folded portion is restrained by the first extending portion, while the lateral inflating action is restrained by the second extending portion. This further ensures the inflating action of the folded portion downward along the vehicle side wall into the occupant protection region.

In the airbag system according to the present invention, the folded portion includes a rolled portion that is rolled up. The vehicle airbag inflates in the region of the occupant protection region which corresponds to the head of the occupant, with the rolled portion restrained by the extending portions from going from the upper part of the vehicle side wall directly to the head of the occupant.
According to the invention, the rolled portion formed by being rolled up (folded) into a roll is particularly effective in inflating surely, in particular, in the region of the occupant protection region which is to be protected reliably, such as the head of the occupant.
With the vehicle airbag of this structure, the extending portion restrains the rolled portion that constructs the folded portion from going directly to the head of the occupant and as such, the folded portion can be inflated in the protection region corresponding to the head of the occupant reliably and smoothly.

According to the invention, the position and number of regions where the rolled portion that constructs the folded portion of the vehicle airbag can be varied if necessary. For example, in addition to the region corresponding to the head of the occupant, the rolled portion can also be inflated in a region corresponding to the region of the occupant which is to be protected reliably.

As described above, the vehicle airbag according to the present invention is defined by claim 1 and has an airbag which has a combination structure of a folded portion that is folded in a predetermined shape and an extending portion extending downward along the folded portion so as to cover the side of the folded portion from the interior side of the vehicle when the vehicle airbag is mounted to the vehicle. This structure achieves a high-level technique of inflating the vehicle airbag quickly and reliably in the occupant protection region between the vehicle side wall and the occupant, thereby ensuring complete protection of the occupant in a car accident.

Embodiments of the present invention will be described hereinbelow with reference to the drawings:
Figs. 11 to 14, 17 and 18 show examples which are not covered by the claims but further help to understand the invention.
Fig. 1 is a schematic diagram showing a state in which an airbag system 100 according to an embodiment is mounted to a car body;
Fig. 2 is a cross sectional view of a center pillar (B-pillar) 14, taken along line A-A in Fig. 1;
Fig. 3 is a schematic diagram of an airbag 120 of the airbag system 100 in Fig. 2;
Fig. 4 is a diagram showing the state of the airbag 120 in Fig. 3 during deployment, viewed from the front of the vehicle;
Fig. 5 is a diagram showing the state of the airbag 120 in Fig. 3 during deployment, viewed from the front of the vehicle;
Fig. 6 is a diagram showing the state of the airbag 120 in Fig. 3 at completion of deployment, viewed from the front of the vehicle;
Fig. 7 is a diagram showing the state of the airbag 120 in Fig. 3 at completion of deployment, viewed from the side of the vehicle;
Fig. 8 is a diagram showing the state of the airbag 120 in an airbag system 200 according to another embodiment at completion of deployment, viewed from the side of the vehicle;
Fig. 9 is a diagram showing the state of the airbag 120 in an airbag system 300 according to another embodiment at completion of deployment, viewed from the side of the vehicle;
Fig. 10 is a schematic diagram of an airbag 220 according to another embodiment;
Fig. 11 is a schematic diagram of an airbag 230;
Fig. 12 is a schematic diagram of an airbag 240;
Fig. 13 is a schematic diagram of an airbag 250;
Fig. 14 is a schematic diagram of an airbag 260;
Fig. 15 is a schematic diagram of an airbag 270 according to another embodiment;
Fig. 16 is a schematic diagram of an airbag 280 according to another embodiment;
Fig. 17 is a schematic diagram of an airbag 290;
Fig. 18 is a schematic diagram of an airbag 300.

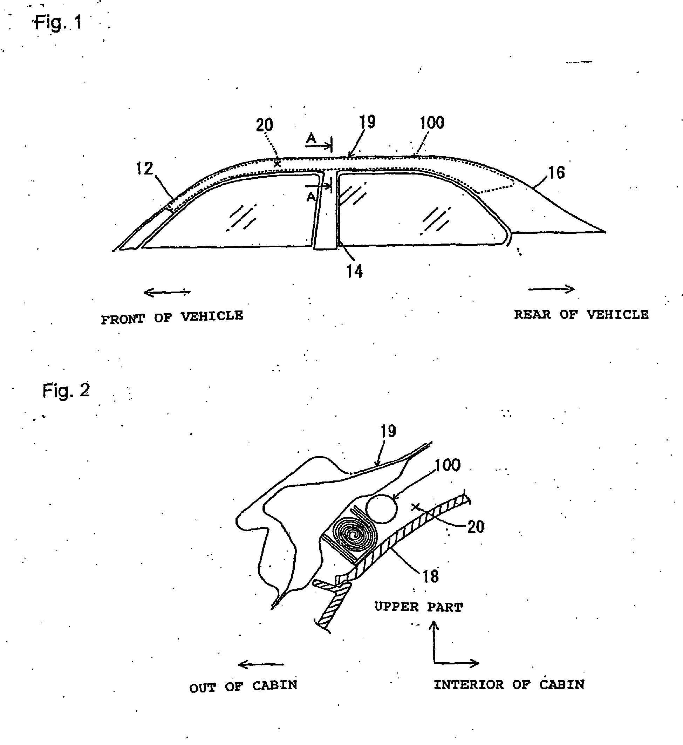

Referring first to Figs. 1 to 7, the structure and operation of an airbag system 100 according to an embodiment of the present invention will be described. In Figs. 1 to 7, the airbag system 100 mounted to the right of a car body having two rows of seats will be described by way of example.
Fig. 1 schematically shows a state in which the airbag system 100 of this embodiment is mounted to a car body. Fig. 2 shows the cross-sectional structure of a center pillar (B-pillar) 14, taken along line A-A in Fig. 1. The airbag system 100 of Fig. 2 is in a state before activation (an initial state). In Fig. 1, the left in the drawing is the front of the car; the right is the rear of the car. Fig. 2 shows the right side wall of the vehicle, in which the right is the interior side of the cabin; the left is the exterior side of the cabin.

As shown in Figs. 1 and 2, the airbag system 100 is disposed in a partitioned region 20 divided by a ceiling panel 18 and a right side roof rail (body panel) 19 and extends in the extending direction of the right side roof rail 19 from a front pillar (A-pillar) 12 to a rear pillar (C-pillar or D-pillar) 16. In other words, the airbag system 100 and an airbag 120, to be described later, are mounted to the upper part of the side wall of the car.

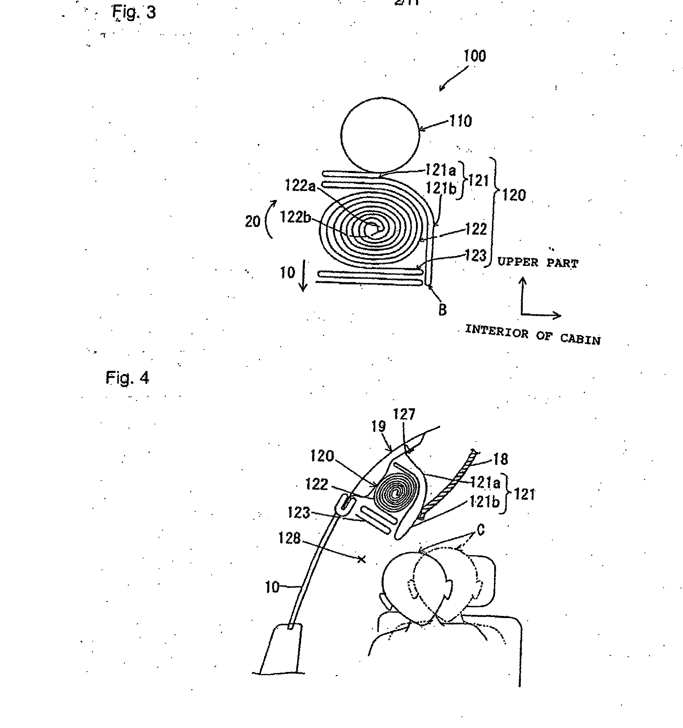

Fig. 3 shows the schematic structure of the airbag 120 of the airbag system 100 in Fig. 2. As will be described below in detail, the airbag system 100 has the function of protecting occupants quickly and reliably in the event of car accidents such as a side crash or rolling sideways. The airbag system 100 in Fig. 3 is accommodated in the right side wall of a car, in which the right is the interior side of the cabin (the interior side of the car).

As shown in Fig. 3, the airbag system 100 is principally composed of the airbag 120 accommodated in a folded state in a predetermined shape in advance and an inflator (gas generator) 110 that can supply inflation gas into the inner space of the airbag 120. The inflator 110 of the embodiment corresponds to the "gas supply means"_of the invention and the airbag 120 of the embodiment corresponds to the "vehicle airbag" of the invention.

With the airbag system 100 mounted to the car body, the base end of the airbag 120 (adjacent to the inflator 110) is arranged approximately at the upper part, while the distal end of the airbag 120 is arranged approximately at the lower part. The airbag 120 is fixed to the right side roof rail 19 via a bracket 127, to be described later.
The inflator 110 is connected to the airbag 120 so as to supply inflation gas into the inner space of the airbag 120. The airbag 120 is broadly divided into a first folded portion 121 which corresponds to the extending portion of the invention, a second folded portion 122, and a third folded portion 123 in order from the base end toward the distal end, and has a so-called "hybrid" folded structure in which the folded portions are combined together.

More specifically, as shown in Fig. 3, the first folded portion 121 includes a first extending portion 121a extending above the second folded portion 122 at the base end of the airbag 120 and a second extending portion 121b extending vertically along the second folded portion 122 and the third folded portion 123 on the side of the second folded portion 122 and the third folded portion 123 adjacent to the interior of the cabin (interior of the car). The first folded portion 121 is formed by folding back the base end of the airbag 120 at a fold-back portion (a fold-back portion B in Fig. 3) and forms "an inverse L-shape" with the first extending portion 121a and the second extending portion 121b. The first folded portion 121 extends downward from the base end (in the direction of arrow 10 in Fig. 2) so as to cover the side of the second folded portion 122 and the third folded portion 123 from the interior side (interior of the cabin), and corresponds to the "extending portion" of the invention. The first extending portion 121a corresponds to the "first extending portion" of the invention, while the second extending portion 121b corresponds to the "second extending portion" of the invention.

The second folded portion 122 is constructed as a rolled portion in which the airbag 120 is rolled up (folded) in a roll. The second folded portion 122 is rolled up in the direction of arrow 20 in Fig. 3 and has a folded-back portion 122a inside the roll (in the center of the roll). The second folded portion 122 corresponds to the "rolled portion" of the invention.

The third folded portion 123 is constructed as a concertinas portion in which the 120 is folded up in concertinas (accordion). The third folded portion 123 corresponds to the "concertinas portion" of the invention. The second folded portion 122 and the third folded portion 123 constructs the "folded portion" of the invention.

In the embodiment, as will be described later in detail, with the airbag 120 in deployment, the second folded portion 122 is located in the region of an occupant protection region which covers the head of an occupant, the first folded portion 121 is located above the head of the occupant, and the third folded portion 123 is located below the head of the occupant.
As shown in Fig. 3, the second folded portion 122 of this embodiment is set to be rolled up such that a projection 122b of the fold-back portion 122a faces the side wall of the vehicle (a side window etc.) when the airbag 120 inflates. With such a roll-up setting of the second folded portion 122, when the second folded portion 122 deploys in the direction of arrow 10 in Fig. 3, the projection 122b of the fold-back portion 122a is rolled up entirely toward the side wall of the vehicle.

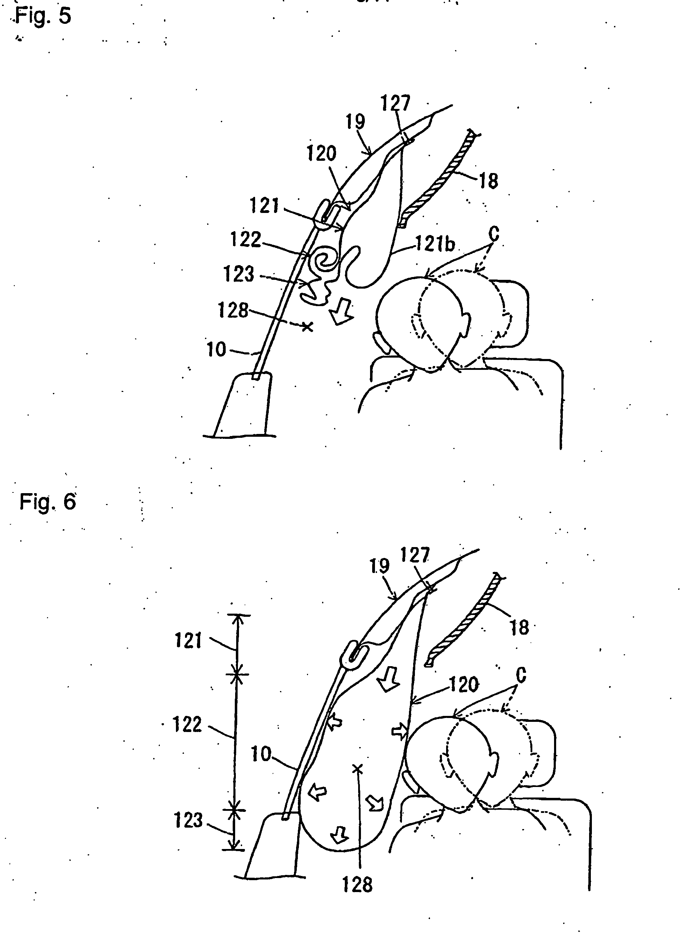

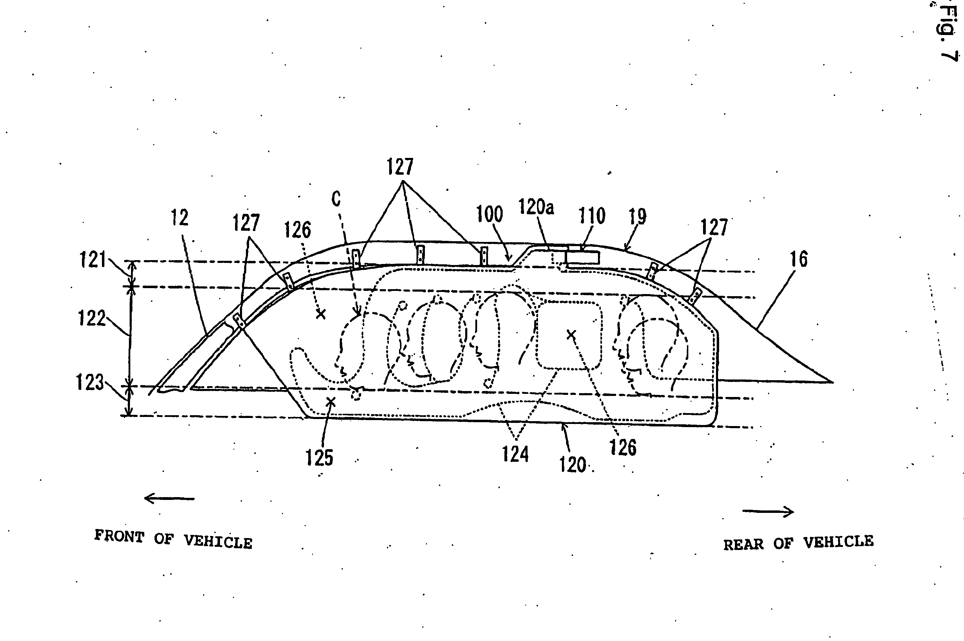

The action of the airbag system 100 will then be described with reference to Figs. 4 to 7. Figs. 4 and 5 show the state of the airbag 120 in Fig. 3 during deployment, viewed from the front of the vehicle. Fig. 6 shows the state of the airbag 120 in Fig. 3 at completion of deployment, viewed from the front of the vehicle. Fig. 7 shows the state, viewed from the side of the vehicle. In Figs. 4 to 6, the state of the head of an occupant C before the occurrence of a side crash or rolling sideways is indicated by a chain double-dashed line and the state of the head of the occupant C during a side crash or rolling sideways is expressed by a solid line.

In the event of a side crash or turn over, the airbag system 100 in the initial state, shown in Fig. 2, is activated to generate inflation gas from the inflator 110. The gas is supplied to the inner space of the airbag 120. As shown in Figs. 4 and 5, the airbag 120 starts inflating action (inflating action while deploying) as the inflator 110 operates, to push the ceiling panel 18 open and inflates downward (deploys downward) toward an occupant protection region 128 between a right side wall (a side window 10) and the occupant C. The first folded portion 121, the second folded portion 122, and the third folded portion 123 inflate while deploying in the occupant protection region 128 during the inflation of the airbag 120. The occupant protection region 128 is a protection region formed between the occupant C and the side wall of the vehicle, which corresponds to the "occupant protection region" of the invention.

In the embodiment, as shown in Figs. 4 and 5, the first folded portion 121 of the airbag 120 which is the extending portion of the invention extends downward so as to cover the second folded portion 122 and the third folded portion 123 from the interior side of the car (the interior of the cabin). Accordingly, the second folded portion 122 and the third folded portion 123 which are the folded portion of the invention are restrained from deploying sideward at the upper part of the occupant protection region, while the folded portions are allowed to deploy downward. In other words, the side wall of the vehicle and the first folded portion 121 which extend vertically partition both sides of the second folded portion 122 and the third folded portion 123 and serve as a kind of wall that restrains the lateral deployment action of the second folded portion 122 and the third folded portion 123. Accordingly, the airbag 120 preferentially inflates (deploys) downward along the vehicle side wall toward the occupant protection region 128, with the direct movement of the second folded portion 122 and the third folded portion 123 from the upper part of the vehicle side wall to the head of the occupant C retrained by the first folded portion 121. This allows a rapid deployment action of the entire airbag 120.

According to the embodiment, the portion of the airbag 120 which covers the head of the occupant C is rolled to form the second folded portion 122. Thus, the airbag 120 can be inflated reliably in the region of the occupant protection region 128 which corresponds to the head of the occupant C to obtain high protection effect. Moreover, the projection 122b of the fold-back portion 122a faces the vehicle side wall when the second folded portion 122 that covers the head of the occupant C inflates, the fold-back portion 122a of the second folded portion 122 is prevented from getting caught by the occupant C in the process of inflation, thus allowing smooth deployment of the airbag 120.
Since the third folded portion 123 of the airbag 120 which is folded up into concertinas has an easily inflatable shape, the embodiment is effective in inflating the third folded portion 123 in the occupant protection region 128 quickly in a short time.
Although the rolled portion like the second folded portion 122 is effective in increasing the occupant protection effect, the concertinas portion is more effective than the rolled portion in inflating the airbag quickly. Accordingly, it is preferable to set a region to be protected by the rolled portion within a minimum range like the head of the occupant.

Thus, as shown in Figs. 6 and 7, the airbag 120 can inflate quickly and reliably into the space (the occupant protection region 128 in Fig. 6) between the right side wall (the side window 10) and the head of the occupant C, with the upper part of the airbag 120 supported by the right side roof rail 19 via the multiple brackets 127. When the airbag 120 has been fully inflated, the second folded portion 122 is located in the region of the occupant protection region 128 which covers the head of the occupant C, the first folded portion 121 is located above the head of the occupant C, and the third folded portion 123 is located below the head of the occupant C. The airbag 120 in a fully inflated state is in the form of a curtain that protects a range from the front pillar 12 to the rear pillar, or a wide range entirely from the position of an occupant sitting in the front seat to the position of an occupant sitting in the rear seat. Thus, the airbag 120 is also referred to as "a curtain airbag."

In the embodiment, as shown in Fig. 7, the vertical length of the second folded portion 122 of the inflated airbag 120 is set to correspond to the positions of the heads of occupants with different figures, the heights and sitting heights, and the positions of the heads of occupants in different seats, the front seat and the rear seat. Accordingly, the inflated airbag 120 works to reliably receive and protect the head of the occupant C who is moving toward the right side wall (the side window 10) in a side crash or turnover. This ensures protection of the occupant C in a side crash or turnover.
The inner space of the airbag 120 of this embodiment is partitioned by a stitched portion 124 into an inflating portion 125 and a noninflating portion 126. Thus, inflation gas supplied through a gas port 120a is guided regularly in the inner space to form a desired flow.

As described above, according to the embodiment, the structure of the airbag 120 in which the first folded portion 121 is provided allows the second folded portion 122 and the third folded portion 123 to preferentially inflate (deploy) downward along the vehicle side wall toward the occupant protection region 128. Accordingly, in a car accident, the airbag 120 can be inflated quickly into the occupant protection region 128 between the vehicle side wall and the occupant, thus achieving a high-level technique of particularly protecting the head of the occupant C.

According to the invention, the first folded portion 121 is composed of the first extending portion 121a and the second extending portion 121b. Thus, the lateral inflating action of the second folded portion 122 and the third folded portion 123 is restrained by the second extending portion 121b, while the upward inflating action is restrained by the first extending portion 121a. This ensures the downward inflating action of the second folded portion 122 and the third folded portion 123 along the vehicle side wall toward the occupant protection region 128.

According to the embodiment, the rolled-up second folded portion 122 of the airbag 120 can be inflated reliably and smoothly in a protection region corresponding to the head of the occupant.

It is to be understood that the present invention is not limited to the above-described embodiment but various applications and modifications can be made. For example, the following applications are possible.

In the above embodiment, the airbag system 100 for protecting the occupant C sitting in the right seat of the vehicle is shown as an example. An airbag system for protecting an occupant sitting in the left seat of the vehicle is also mounted as an airbag system with the same structure as that of the airbag system 100. The airbag system has a structure in which a system symmetrical to the airbag system 100 is fixed to a left side roof rail.

The above embodiment has been described for the case in which the first folded portion 121 is formed by folding the base end of the airbag 120 at the fold-back portion B. However, according to the invention, the first folded portion 121 may be formed by folding any portions from the base end to the distal end of the airbag 120 as appropriate.

The above embodiment has been described for the case in which the first folded portion 121, the second folded portion 122, and the third folded portion 123 are arranged in that order from the base end to the distal end of the airbag 120. However, according to the invention, the arrangement of the folded portions can be varied if necessary. For example, they may be arranged in order of the first folded portion 121, the third folded portion 123, and the second folded portion 122 from the base end to the distal end of the airbag 120.

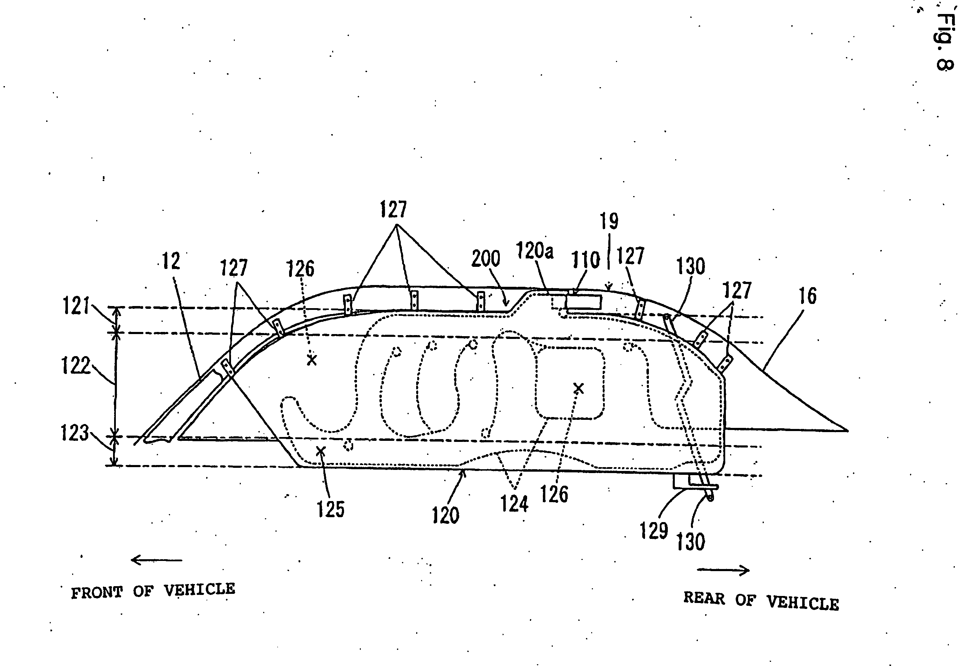

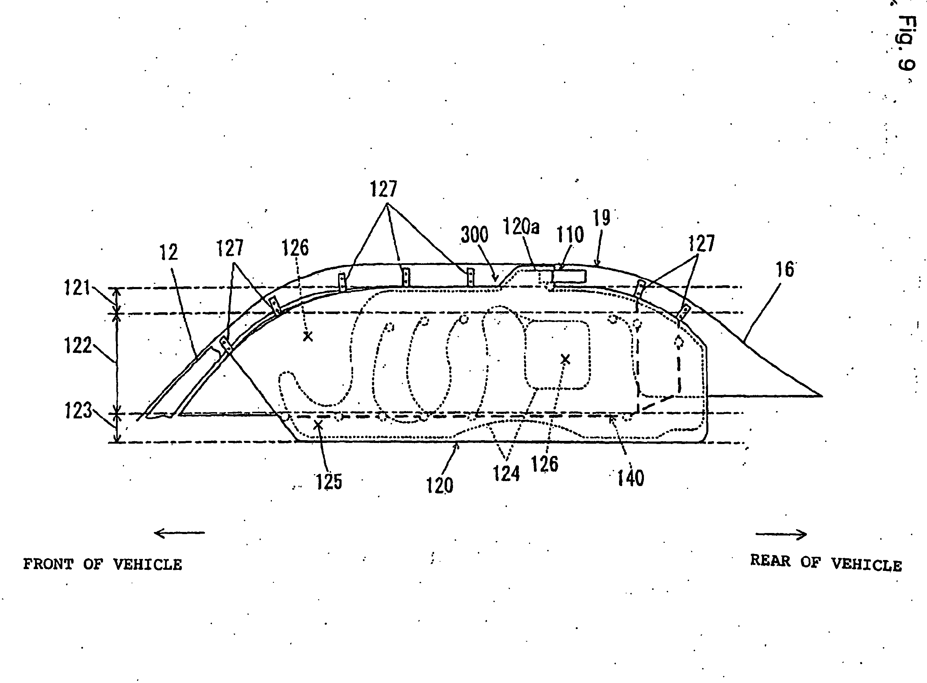

Also, in the invention, an airbag system 200 shown in Fig. 8 or an airbag system 300 shown in Fig. 9 may be adopted in place of the airbag system 100 of the above embodiment. Here, referring to Figs. 8 and 9, the structures of the airbag system 200 and the airbag system 300 will be described. In Figs. 8 and 9, the same components as those of Fig. 7 are given the same reference numerals and their detailed description will be omitted.

The airbag system 200 shown in Fig. 8 includes a guide member 130 for guiding the end of the airbag 120 adjacent to the rear of the vehicle from above downward along the rear pillar 16. The guide member 130 is long and fixed to the rear pillar 16. A connecting strap (tension strap) 129 of the airbag 120 is looped around the guide member 130, so that the airbag 120 and the guide member 130 are joined together. The connecting strap 129 connected to the guide member 130 functions to prevent the head of the occupant from being thrown out of the car in a car accident.
The airbag system shown in Fig. 9 includes a wire 140 for supporting the inflated airbag 120 from the upper part of the vehicle.
In the airbag systems 200 and 300 with such structures, the airbag 120 that is folded as in the airbag system 100 is used. Accordingly, the airbag 120 can be inflated quickly and reliably in the occupant protection region 128 between the vehicle side wall and the occupant, thus achieving a high-level technique of particularly protecting the head of the occupant C.

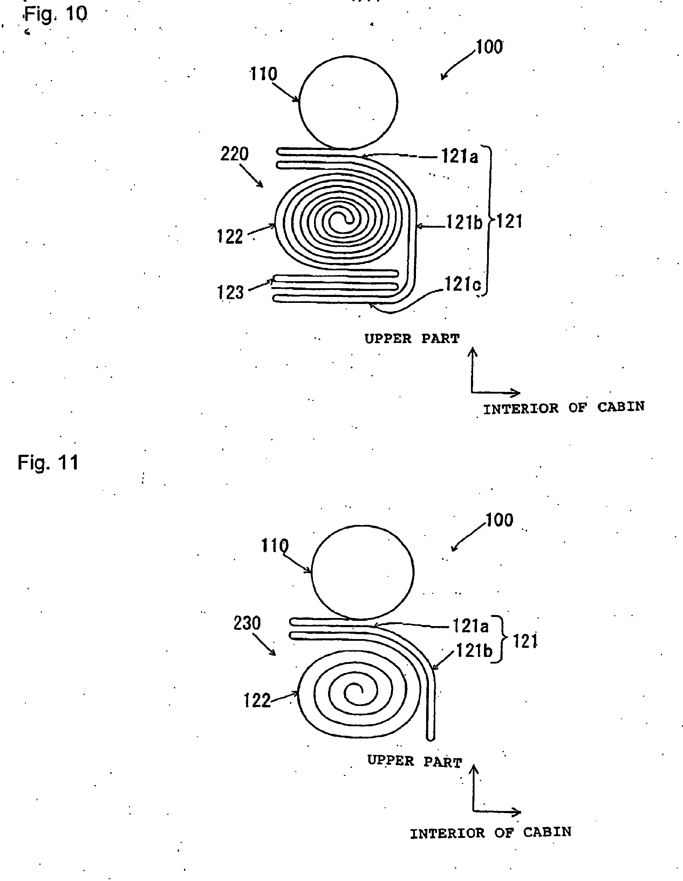

The airbag 120 of the above embodiments can take various folded structures. Figs. 10 to 15 show other embodiments of the airbag 120. In the drawings, the same components as those of Fig. 3 are given the same reference numerals.

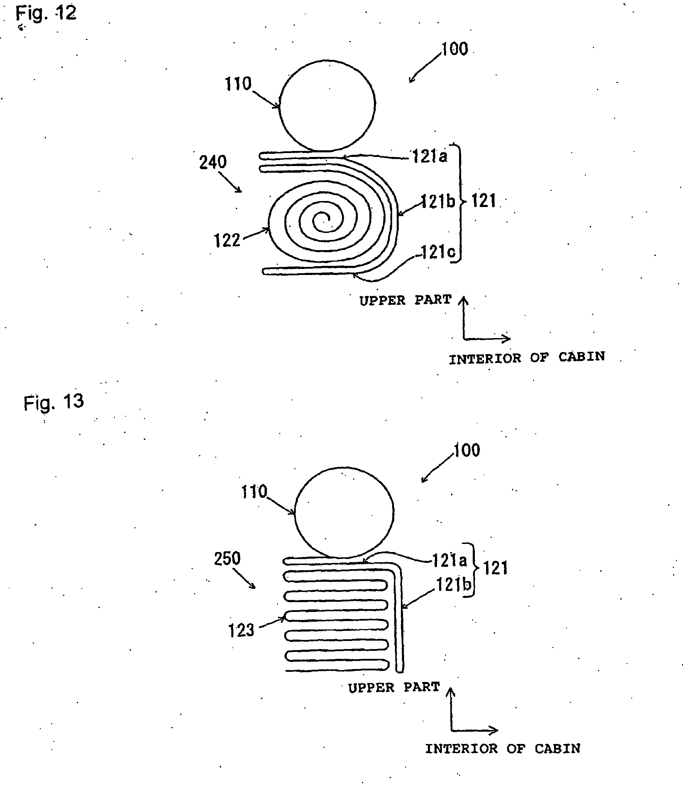

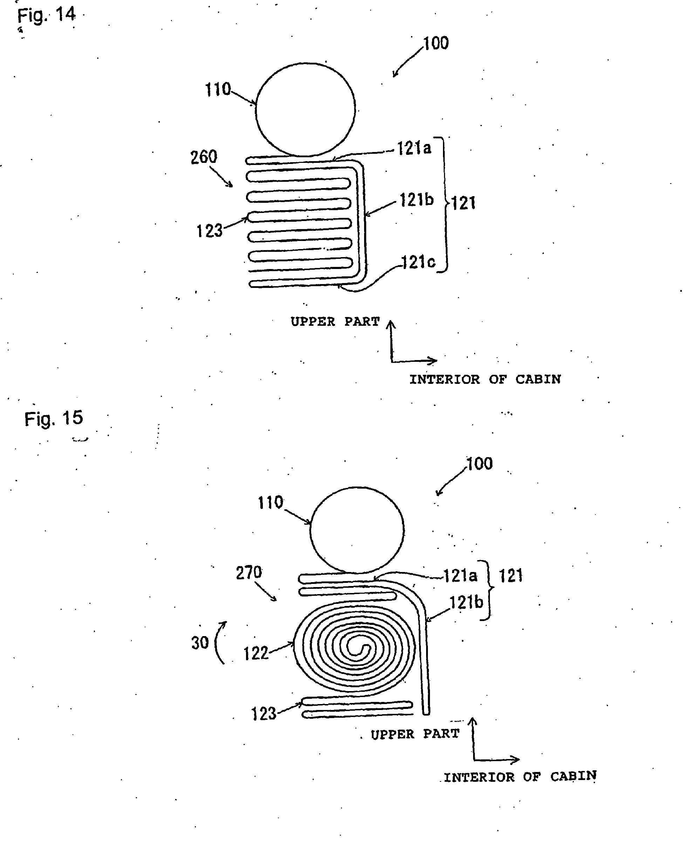

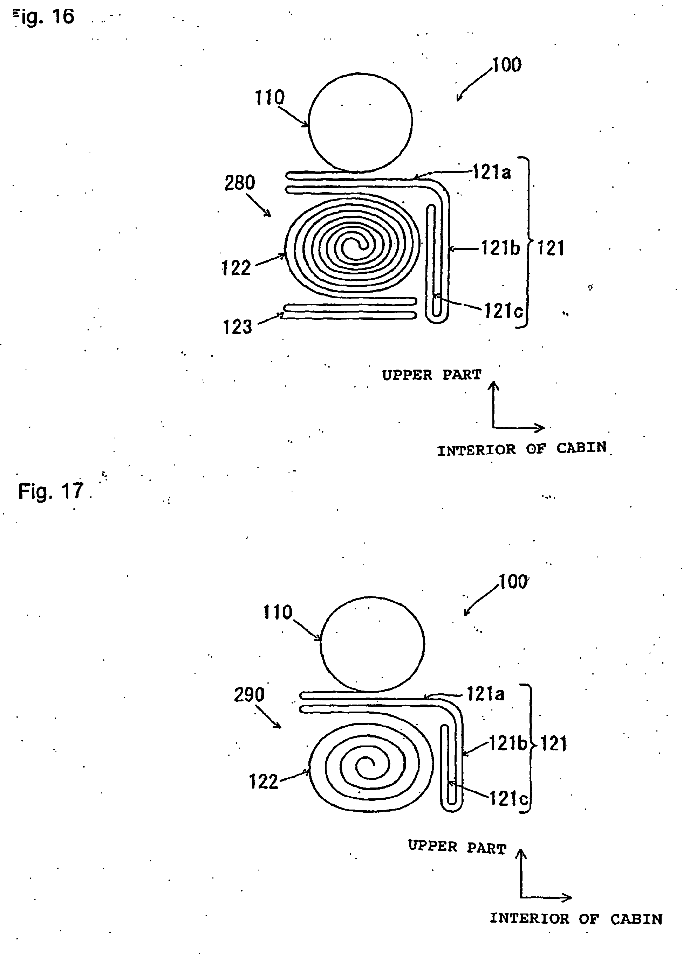

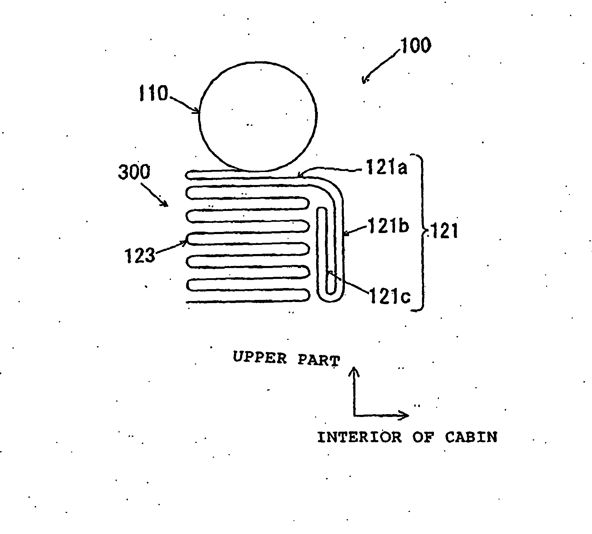

An airbag 220 shown in Fig. 10 has a structure in which the first folded portion 121 further has a third extending portion 121c, in addition to the structure of the airbag 120 shown in Fig. 3. The third extending portion 121c extends below the third folded portion 123. The first folded portion 121 has a U-like configuration made of the first extending portion 121a, the second extending portion 121b, and the third extending portion 121c.
An airbag 230 shown in Fig. 11 has a structure in which the concertina portion like the third folded portion 123 is omitted in the structure of the airbag 120 shown in Fig. 3.
An airbag 240 shown in Fig. 12 has a structure in which the concertina portion like the third folded portion 123 is omitted in the structure of the airbag 220 shown in Fig. 10.
An airbag 250 shown in Fig. 13 has a structure in which the rolled portion like the second folded portion 122 is omitted in the structure of the airbag 120 shown in Fig. 3.
An airbag 260 shown in Fig. 14 has a structure in which the rolled portion like the second folded portion 122 is omitted in the structure of the airbag 220 shown in Fig. 10.
An airbag 270 shown in Fig. 15 has a structure in which the second folded portion 122 is rolled up in the direction of arrow 30 opposite to arrow 20 of Fig. 3, in the structure of the airbag 120 shown in Fig. 3.
An airbag 280 shown in Fig. 16 has a structure in which the third extending portion 121c is folded between the second folded portion 122 and the third folded portion 123 and the second extending portion 121b of the first folded portion 121 and is extended vertically, in the structure of the airbag 220 shown in Fig. 10. In other words, the third extending portion 121c extends downward from the base end toward the distal end along the second folded portion 122 and the third folded portion 123 and then extends upward along the second folded portion 122 and the third folded portion 123.
An airbag 290 shown in Fig. 17 has a structure in which the third extending portion 121c is folded between the second folded portion 122 and the second extending portion 121b of the first folded portion 121 and is extended vertically, in the structure of the airbag 240 shown in Fig. 12. In other words, the third extending portion 121c extends downward from the base end toward the distal end along the second folded portion 122 and then extends upward along the second folded portion 122.
An airbag 300 shown in Fig. 18 has a structure in which the third extending portion 121c is folded between the third folded portion 123 and the second extending portion 121b of the first folded portion 121 and is extended vertically, in the structure of the airbag 260 shown in Fig. 14. In other words, the third extending portion 121c extends downward from the base end toward the distal end along the third folded portion 123 and then extends upward along the third folded portion 123.
The airbags 270 and 280 with such structures offer the same advantages as those of the airbag 120, owing to the structure of the first folded portion 121 including at least the first extending portion 121a and the second extending portion 121b. Like the airbag 120, the structures of these airbags can also be applied to the airbag systems 100, 200, and 300.

The airbag system of the invention may be constructed in such a way that the components of the airbag system are mounted to the body of a vehicle in sequence, or alternatively, a module-type airbag system is mounted in its entirety to the body of a vehicle.

The above embodiment has been described for the airbag 120 that protects a wide range corresponding to the position of a front seat occupant to the position of a rear seat occupant collectively. However, according to the invention, the airbag can be divided into multiple airbags. For example, a first airbag for protecting a front seat occupant and a second airbag for protecting a rear seat occupant can be provided separately. This structure is effective in inflating the separately arranged airbags at a desired speed. This structure is particularly effective for a vehicle that is long from the front pillar to the rear pillar, thus having a long occupant protection region along the length of the vehicle. In place of the car having two rows of seats as in this embodiment, the airbag systems 100, 200, and 300 according to the embodiments can be mounted to a car with three rows of seats.

The above embodiments have been described for the structure of airbag systems mounted to cars. However, the invention can also be applied to the structure of airbag systems mounted to various vehicles other than cars, such as trains and vessels.

## Claims

1. A vehicle having an airbag system, said airbag system comprising:
a vehicle airbag (120) adapted to be mounted to the upper part (20) of the side wall of the a vehicle, for protecting an occupant (C) by inflating downward into an occupant protection region (128) between the occupant (C) and the side wall of the vehicle, and
gas supply means (110) for supplying inflation gas to the vehicle airbag (120),
the vehicle having an airbag system is **characterized by** the vehicle airbag comprising:
a folded portion (122, 123)
that is folded in a predetermined shape and comprises a rolled portion (122) and a concertina portion (123) folded up in accordion and being provided at the end of the rolled portion (122) and
an extending portion (121, 121a, 121b), including
a first extending portion (121a) extending above the rolled portion (122) and being adapted to restrain the folded portion (122, 123) from upward inflating action, and
a second extending portion (121b) extending downward along the folded portion (122, 123) so as to cover the side of the folded portion (122, 123) from the interior side of.the vehicle when the vehicle airbag is mounted to the vehicle and being adapted to restrain the folded portion (122, 123) from deploying laterally at the upper part of the occupant protection region (128) and to allow the folded portion (122, 123) to deploy downward along the vehicle side wall toward the occupant protection region (128).

2. The vehicle according to claim 1, wherein
the extending portion (121) of the vehicle airbag (120) includes a first extending portion (121a) extending above the rolled portion (122) and a second extending portion (121b) extending along the side of the concertina portion (123).

3. The vehicle according any one of Claims 1 or 2, wherein
the rolled portion (122) of the vehicle airbag (120) is rolled up in a rolled shape and adapted to be inflated in the region of the occupant protection region (128) which corresponds to the head of the occupant (C), with the rolled portion (122) restrained by the extending portion (121) from going from the upper part of the vehicle side wall directly to the head of the occupant.

## Patentansprüche

1. Fahrzeug mit einem Airbagsystem mit:
einem am oberen Teil (20) der Seitenwand des Fahrzeugs anzubringenden Fahrzeugairbag (120) zum Schutz eines Insassen (C) durch Aufblasen nach unten in einen Insassen- Schutzbereich (128) zwischen dem Insassen (C) und der Seitenwand des Fahrzeugs, und
eine Gaszuführeinrichtung (110) zum Zuführen von Füllgas zum Fahrzeugairbag (120),
wobei das ein Airbagsystem aufweisende Fahrzeug **gekennzeichnet ist durch** den Fahrzeugairbag mit
einem gefalteten Abschnitt (122, 123), der in einer vorbestimmten Form gefaltet ist und einen gerollten Abschnitt (122) und einen zieharmonikaartigen Abschnitt (123) aufweist, welcher als Zieharmonika zusammengefaltet und am Ende des gerollten Abschnitts (122) vorgesehen ist, und
einem Erstreckungsabschnitt (121, 121 a, 121b) mit
einem sich oberhalb des gerollten Abschnitts (122) erstreckenden ersten Erstreckungsabschnitt (121a), um das Aufblasen des gefalteten Abschnitts (122, 123) nach oben zu verhindern, und
einem sich nach unten entlang dem gefalteten Abschnitt (122, 123) erstreckenden zweiten Erstreckungsabschnitt (121b) zum Abdecken der Seite des gefalteten Abschnitts (122, 123) gegen die Innenraumseite des Fahrzeugs, wenn der Fahrzeugairbag am Fahrzeug angebracht ist, und um ein seitlich gerichtetes Entfalten des gefalteten Abschnitts (122, 123) am oberen Teil des Insassen-Schutzbereichs (128) zu verhindern und um ein nach unten entlang der Fahrzeugseitenwand auf den Insassen-Schutzbereich (128) gerichtetes Entfalten des gefalteten Abschnitts (122, 123) zuzulassen.

2. Fahrzeug nach Anspruch 1, wobei
der Erstreckungsabschnitt (121) des Fahrzeugairbags (120) einen sich oberhalb des gerollten Abschnitts (122) erstreckenden ersten Erstreckungsabschnitt (121a) und einen sich entlang der Seite des zieharmonikaartigen Abschnitts (123) erstreckenden zweiten Erstreckungsabschnitt (121b) aufweist.

3. Fahrzeug nach einem der Ansprüche 1 oder 2, wobei
der gerollte Abschnitt (122) des Fahrzeugairbags (120) zu einer gerollten Form zusammengerollt ist und zum Entfalten in den dem Kopf des Insassen (C) entsprechenden Bereich des Insassen-Schutzbereichs (128) vorgesehen ist, wobei durch den Erstreckungsabschnitt (121) verhindert wird, dass der gerollte Abschnitt (122) vom oberen Teil der Fahrzeugseite aus direkt zum Kopf des Insassen führt.

## Revendications

1. Véhicule doté d'un système d'airbag, ledit système d'airbag comprenant :
un airbag de véhicule (120) prévu pour être monté sur la partie supérieure (20) de la paroi latérale du véhicule,
pour protéger un occupant (C) par gonflement vers le bas dans une zone de protection d'occupant (128) entre ledit occupant (C) et la paroi latérale du véhicule, et
un moyen d'alimentation en gaz (110) destiné à amener du gaz pour le gonflement de l'airbag de véhicule (120),
le véhicule pourvu d'un système d'airbag étant **caractérisé par** l'airbag de véhicule comprenant :
une partie pliée (122, 123), qui est pliée suivant une forme déterminée et qui comprend une partie enroulée (122) et une partie en accordéon (123), qui est pliée en accordéon et qui est prévue à l'extrémité de la partie enroulée (122) et
une partie en extension (121, 121a, 121b), comprenant
une première partie en extension (121a) s'étendant au-dessus de la partie enroulée (122) et prévue pour contenir le gonflement vers le haut de la partie pliée (122, 123), et
une deuxième partie en extension (121b) s'étendant vers le bas le long de la partie pliée (122, 123), de manière à couvrir le côté de la partie pliée (122, 123) depuis l'intérieur du véhicule lorsque l'airbag de véhicule est monté dans le véhicule, et prévue pour contenir le déploiement latéral de la partie pliée (122, 123) sur la partie supérieure de la zone de protection d'occupant (128) et pour permettre le déploiement vers le bas de la partie pliée (122, 123) le long de la paroi latérale du véhicule, vers la zone de protection d'occupant (128).

2. Véhicule selon la revendication 1, où
la partie en extension (121) de l'airbag de véhicule (120) comprend une première partie en extension (121a) s'étendant au-dessus de la partie enroulée (122) et une deuxième partie en extension (121b) s'étendant sur le côté de la partie en accordéon (123).

3. Véhicule selon l'une quelconque des revendications 1 et 2, où la partie enroulée (122) de l'airbag de véhicule (120) est enroulée en forme cylindrique et prévue pour être gonflée au niveau de la zone de protection d'occupant (128) qui correspond à la tête de l'occupant (C), avec la partie enroulée (122) empêchée par la partie en extension (121) d'aller directement vers la tête de l'occupant depuis la partie supérieure de la paroi latérale du véhicule.
